## Europäisches Patentamt
## European Patent Office
## Office européen des brevets

(11) Numéro de publication: **0 134 867**
**B1**

(19)

(12) **FASCICULE DE BREVET EUROPÉEN**

(45) Date de publication du fascicule du brevet:
18.03.87

(21) Numéro de dépôt: **83401676.8**

(22) Date de dépôt: **18.08.83**

(51) Int. Cl.⁴: **H 04 M 19/04**

(54) Circuit de sonnerie pour poste téléphonique réalisable en circuit intégré.

(43) Date de publication de la demande:
**27.03.85 Bulletin 85/13**

(45) Mention de la délivrance du brevet:
**18.03.87 Bulletin 87/12**

(84) Etats contractants désignés:
**DE GB IT NL**

(56) Documents cité:
**GB-A-2 037 128**
**US-A-4 146 754**

**ELEKTROTECHNIK, vol. 63, no. 22, 23 novembre 1981, Würzburg (DE), "Tonrufbaustein ersetzt Telefonwecker", page 85**

(73) Titulaire: **ITT INDUSTRIES INC., 320 Park Avenue, New York, NY 10022 (US)**

(72) Inventeur: **Colardelle, Joel Serge Gérard, Résidence Vignes de Bures Avenue de Champagne, F-91940 Les Ulis (FR)**
Inventeur: **Lerouge, Claude Paul Henri, 4, place d'Auvergne, F-78310 Maurepas (FR)**
Inventeur: **Loup, Nicole Jacqueline Rolande, 28, rue du Général Exelmans, F-78140 Vélizy-Villacoublay (FR)**

(74) Mandataire: **Pothet, Jean, c/o ITT Data Systems France S.A. Tour Maine Montparnasse 33, avenue du Maine, F-75755 Paris Cédex 15 (FR)**

## Description

La présente invention se rapporte à un circuit de sonnerie pour poste téléphonique, réalisable en circuit intégré, destiné à fournir à un haut-parleur un signal à fréquence audible à une fréquence choisie, lorsque le signal de sonnerie est présent sur la ligne téléphonique aboutissant audit poste, ledit circuit de sonnerie étant alimenté par ledit signal de sonnerie corvenablement redressé.

Dans les postes téléphoniques d'abonnés, doit être prévue une sonnerie sensible aux signaux d'appel provenant du central auquel ils sont raccordés. Ces signaux d'appel ou signaux de sonnerie ont des caractéristiques bien déterminées de fréquence et d'amplitude permettant de les détecter et d'actionner une sonnerie dans le poste d'abonné. Ces caractéristiques varient cependant avec les pays. En France, pour les centraux électromécaniques, les signaux de sonnerie sont constitués par un signal alternatif à cinquante hertz de niveau assez élevé (de l'ordre de quatre-vingts volts) pouvant actionner directement une sonnerie électromécanique classique.

Cependant, ces sonneries ont l'inconvénient d'être encombrantes et de consommer une énergie relativement importante. On a donc essayé de remplacer ces sonneries électromécaniques par des circuits de sonnerie électroniques plus économiques et plus souples, en particulier dans le choix des sons émis.

On a ainsi proposé des circuits de type analogique fonctionnant avec des filtres pour détecter un signal de sonnerie de caractéristiques données (GB-A- 2 037 128). Mais de par leur conception, ces circuits ne peuvent être adaptés facilement pour des signaux de sonnerie de caractéristiques différentes. Par ailleurs, même si dans certains cas, on a proposé des moyens pour limiter la consommation de courant en l'absence de signal de sonnerie, les circuits de sonnerie proposés font encore appel en permanence à une alimentation par le tension continue présente dans le boucle d'abonné.

La présente invention a donc pour objet un circuit de sonnerie électronique qui permet de reconnaître avec certitude la présence d'un signal de sonnerie dans la boucle d'abonné, tout en pouvant s'adapter très facilement à des caractéristiques de fréquence différentes de ce signal.

Un autre objet de l'invention est un circuit de sonnerie qui est alimenté uniquement par le signal de sonnerie et qui ne consomme aucun courant en son absence.

Selon l'invention, ceci est obtenu par le fait que ledit circuit de sonnerie comprend:
- un circuit d'horloge fournissant divers signaux d'horloge à partir des signaux d'un oscillateur stable;
- un compteur associé à un décodeur, ledit compteur comptant les impulsions d'un signal d'horloge reçu du circuit d'horloge et pouvant être réinitialisé par un premier signal de commande et ledit décodeur fournissant à partir du contenu du compteur un signal initial, correspondant à l'apparition du code initial dans le compteur, et différents signaux de temps correspondant respectivement à l'écoulement de différentes périodes de temps à partir du signal initial;
- un générateur de sonnerie fournissant, à partir d'un signal d'horloge délivré par le circuit d'horloge, ledit signal à fréquence audible lorsqu'il reçoit un second signal de commande; et
- un ensemble de détection de signal de sonnerie comprenant un circuit de détection de transitions de même sens dans le signal de sonnerie reçu, circuit qui fournit le premier signal de commande et un troisième signal de commande lors de l'apparition de chaque transition ayant ledit sens, et un circuit de mesure du temps écoulé entre deux transitions successives détectées par le circuit de détection de transitions pour déterminer si le signal de sonnerie est présent et fournir alors ledit second signal de commande pendant tout le temps de sa présence.

Une autre caractéristique de l'invention réside dans le fait que ledit circuit de sonnerie comporte en outre un circuit de détection de tension suffisante pour détecter si la tension redressée obtenue à partir du signal de sonnerie est suffisante pour assurer le fonctionnement normal du circuit de sonnerie et pour fournir un signal d'autorisation de fonctionnement à l'ensemble de détection de signal de sonnerie, signal d'autorisation dont l'absence maintient ledit ensemble en position d'attente.

L'invention sers mieux comprise et d'autres caractéristiques apparaîtront à l'aide de la description ci-après et des dessins joints où:
- la figure 1 représente le schéma du circuit de sonnerie selon l'invention; est
- les figures 2 à 4 représentent des diagrammes dans le temps de signaux permettant d'expliquer le fonctionnement du circuit de la figure 1 dans différents cas.

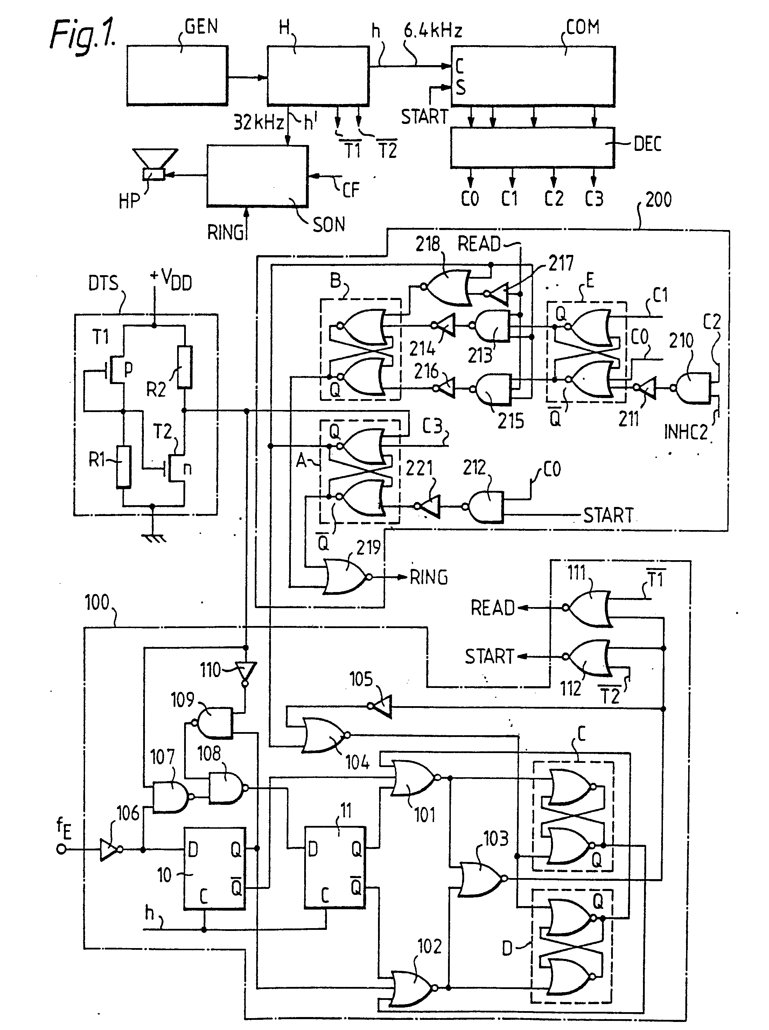

Le curcuit de sonnerie représenté sur la figure 1 peut être réalisé entièrement en circuit intégré MOS. Il comprend, d'une part, un certain nombre de circuits classiques qui sont représentés seulement par des blocs sans entrer dans le détail connu de leur consistution et, d'autre part, des curcuits selon l'invention représentés plus en détail.

Le circuit de sonnerie selon l'invention comprend un circuit d'horloge H recevant les signaux d'un oscillateur stable GEN, par exemple à quatre cent cinquante-cinq kilohertz, et fournissant par division convenable un premier signal d'horloge h à 6,4 kHz et deux autres signaux $\bar{T}1$ et $\bar{T}2$ de même fréquence mais décalés dans le temps ainsi qu'un deuxième signal d'horloge h' à une fréquence plus élevée (trente-deux kilohertz par exemple). Ce signal h' est envoyé à un générateur de sonnerie SON, constitué essentiellement par un diviseur programmable dont la valeur du diviseur peut être réglée manuellement par l'utilisateur à l'aide d'une commande CF de façon à obtenir sur le haut-parleur HP la fréquence audible préférée. Le générateur de sonnerie SON fournit un signal au haut-parleur HP lorsqu'il y est autorisé par un signal de commande RING.

Le signal d'horloge h est envoyé à l'entrée d'un compteur cyclique COM qui est remis à l'état initial par un signal de commande START. Ce compteur est couplé à un décodeur DEC fournissant un signal initial CO correspondant à l'apparition du code initial dans le compteur COM et plusieurs signaux de temps C1, C2, C3, correspondant à l'apparition de certains codes dans le compteur, obtenus après des durées de comptage prédéterminées à partir du code initial.

Les signaux de commande RING et START sont obtenus à partir d'un ensemble de détection de signal de sonnerie comportant un circuit 100 de détection des transitions de même sens dans le signal de sonnerie reçu de fréquence $f_E$ et un circuit 200 de mesure du temps écoulé entre deux transitions successives détectées par le circuit 100.

Le circuit de sonnerie comprend en outre un circuit de détection de tension suffisante DTS qui reçoit comme tension d'alimentation $+V_{DD}$ la tension obtenue par redressement (par exemple par un pont de diode non représenté précédé d'une résistance et d'une capacité pour l'isoler de la tension continue présente sur la ligne d'abonné) de la tension alternative de sonnerie lorsque le signal de sonnerie est présent sur la ligne. Il est clair que lors de l'établissement du signal de sonnerie, la tension redressée va croître progressivement, en raison notamment des capacités, de zéro jusqu'à la valeur normale d'alimentation. Pour éviter un fonctionnement anormal du circuit de sonnerie et un déclenchement intempestif éventuel de la sonnerie en raison d'une trop faible tension d'alimentation des divers composants, le circuit DTS est prévu pour ne fournir un signal d'autorisation aux circuits 100 et 200 que lorsque la tension $+V_{DD}$ a dépassé une valeur de seuil prédéterminée. Pour cela, le circuit DTS comprend, en parallèle aux bornes de l'alimentation redressée, une première branche, formée d'un transistor MOS T1 de type p, dont la grille et le drain sont reliés, et d'une résistance R1 en série, et une seconde branche, formée d'une résistance R2 en série avec un transistor MOS T2 de type n dont la grille est reliée au point commun entre le transistor T1 et la résistance R1, le signal d'autorisation étant prélevé au point commun entre la résistance R2 et le transistor T2. Lorsque la tension d'alimentation commence à croître, les deux transistors T1 et T2 sont bloqués. Lorsque cette tension atteint une valeur VT égale à la tension de seuil des transistors MOS (tension de seuil qu'on peut supposer identique pour les deux types de transistors MOS, sans que cela soit indispensable), le transistor T1 commence à conduire mais le transistor T2 reste bloqué tant que la tension aux bornes de la résistance R1 n'atteint pas la valeur VT. Le signal de sortie est donc au niveau haut. Lorsque la tension aux bornes de la résistance R1 atteint la valeur VT, ce qui se produit pour une tension aux bornes du transistor T1 de l'ordre de 2 VT, le transistor T2 devient conducteur et le signal de sortie passe au niveau bas. Le signal d'autorisation est donc constitué par un niveau bas fourni dès que la tension d'alimentation $+V_{DD}$ dépasse une valeur donnée sensiblement égale à $+3$ VT.

Le circuit 100 de détection de transitions de même sens reçoit les signaux de sonnerie de fréquence $f_E$ et autres signaux alternatifs présents sur la ligne d'abonné sur un inverseur 106 qui les transforme en signaux carrés. Ces signaux carrés d'entrée sont appliqués à l'entrée D d'une première bascule 10 de type D dont l'entrée d'horloge reçoit le signal d'horloge h. L'état de la bascule 10 est recopié, sur l'impulsion d'horloge suivante, par une deuxième bascule 11 dont l'entrée D est reliée soit à la sortie non inversée de la bascule 10, soit à son entrée par un circuit logique formé des portes NON ET 107, 108 109 et de l'inverseur 110 et commandé par le signal d'autorisation du circuit détecteur de tension suffisante DTS. Deux bascules à verrouillage ("latch" dans la littérature anglo-saxonne) C et D servent à la mémorisation du sens dans lequel a lieu la première transition détectée dans le signal d'entrée à fréquence $f_E$. La détection des transitions et la commande des bascules C et D s'effectuent à l'aide de deux portes NON-OU 101 et 102 comparant l'état des bascules 10 et 11. La porte NON-OU 101 dont la sortie commande la bascule à verrouillage C, a une entrée reliée à la sortie inversée $\bar{Q}$ de la bascule 10 et une entrée reliée à la sortie non inversée Q de la bascule 11. La porte NON-OU 102 dont la sortie commande la bascule à verrouillage D, a une entrée reliée à la sortie non inversée Q de la bascule 10 et une entrée reliée à la sortie inversée $\bar{Q}$ de la bascule 11. Chacune des deux portes NON-OU a une troisième entrée de verrouillage reliée à la sortie Q de la bascule à verrouillage qu'elle ne commande pas.

Une troisième porte NON-OU 103 a ses entrées reliées aux sorties des deux portes NON-OU 101 et 102 et fournit un signal de transition détectée vers deux portes NON-OU 111 et 112 qui le mettent en coïncidence respectivement avec les signaux d'horloge décalés $\bar{T}1$ et $\bar{T}2$ pour fournir successivement un signal de commande READ puis un signal de commande START. Un circuit de remise à zéro des bascules à verrouillage C et D est constitué par un inverseur 105, connecté à la sortie de la porte NON-OU 103, et une porte NON-OU 104.

Le circuit 200 de mesure du temps comprend une première bascule à verrouillage A de fonction qui, selon son état, met l'ensemble de détection en position d'attente ou de mesure. La position d'attente est caractérisée par un niveau logique $\underline{0}$ sur la sortie Q de la bascule A qui est forcée dans cet état si le signal d'autorisstion circuit DTS est absent (niveau haut) ou si le décodeur DEC lui fournit le signal de temps C3 correspondant à la fin du comptage (comptage maximum) du compteur COM. La bascule à verrouillage A passe dans l'état $\underline{1}$ (position de mesure) sous la commande du signal de commande START coïncidant avec l'apparition du signal initial CO, ceci par l'intermédiaire d'une porte NON-ET 212 et d'un inverseur 221.

Le circuit 200 comprend ensuite une bascule de verrouillage E de mesure qui détermine, lorsque es sortie Q est à l'état $\underline{O}$, un créneau de validité pour l'apparition d'une transition de même sens que la première transition ayant été détectée par le circuit 100. Cette bascule E est mise à l'état $\underline{O}$ par le signal de temps C1 et remise à l'état 1 soit par le signal initial CO, soit par le signal de temps C2. Dans certains cas, on peut prévoir d'inhiber l'action du signal C2 à l'aide d'un sigmal INHC2 par l'intermédiaire de la porte NON-ET 210 et de l'inverseur 211. Une troisième bascule à verrouillage B de lecture est reliée à la bascule E et à la bascule A par un circuit logique composé des portes NON-ET 213, 215, des inverseurs 214, 216, 217 et de la porte NON-OU 218. Ce circuit logique est commandé par le signal de commande READ et autorise la recopie par la bascule B de l'état de la bascule E lorsque la bascule A est en position de mesure ou positionne la bascule B dans l'état correspondant à une mesure non valide, quand la bascule A est en position d'attente.

Une porte NON-OU 219 fournit le signal de commande RING et a ses deux entrées reliées respectivement à la sortie Q̄ de la bascule et à la sortie Q de la bascule B. Enfin, la sortie Q de la bascule A est aussi reliée à une entrée de la porte NON-OU 104 du circuit 100.

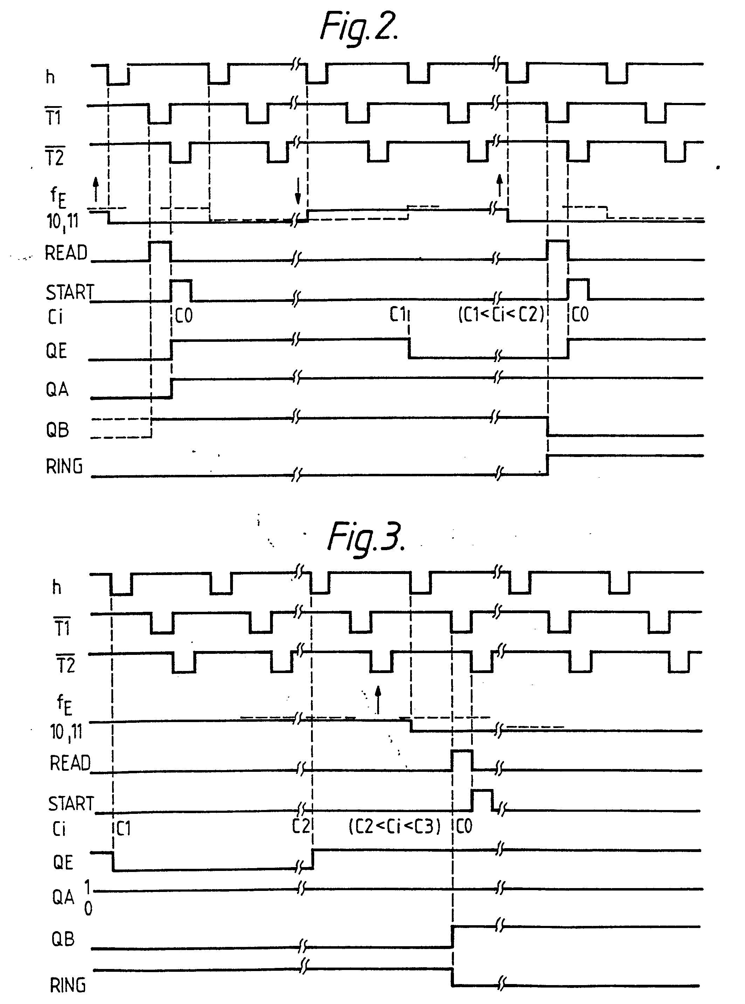

Le fonctionnement de l'ensemble va être expliqué en relation avec les figures 2 à 4.

Les signaux de temps C1, C2 et C3 ont été choisis respectivement pour correspondre à des durées, depuis le signal initial CO, de 16,4 ms (cent sixième impulsion d'horloge à partir de l'initialisation), 49,8 ms (trois cent vingtième impulsion) et 79,7 ms (cinq cent onzième impulsion), ce qui correspond sensiblement à des fréquences de 60 Hz, 20 Hz et 12,5 Hz.

Lorsqu'un signal alternatif tel qu'un signal de sonnerie apparait sur la ligne d'abonné, la tension d'alimentation $+V_{DD}$ commence à croître. Tant qu'elle est inférieure au seuil $+3$ VT, le signal d'autorisation du circuit DTS est absent et le niveau haut fourni par celui-ci met la bascule à verrouillags A à l'état $\underline{O}$, donc en position d'attente, bloque la porte NON-ET 109 et ouvre les portes NON-ET 107 et 108, de sorte que les bascules 10 et 11 ayant leurs entrées reliées entre elles sont forcées de conserver à chaque instant des états identiques quel que soit le signal d'entrée $f_E$. Il ne peut donc y avoir détection de transitions.

Dès que la tension d'alimentation redressée $+V_{DD}$ dépasse la valeur $+3$ VT, le circuit de détection de tension suffisante DTS fournit un signal d'autorisation de niveau $\underline{0}$ qui bloque la porte NON-ET 107 et ouvre les portes NON-ET 108 et 109, ce qui relie l'entrée de la bascule 11 à la sortie Q de la bascule 10. Le circuit 100 de détection de transitions est alors opérationnel. Les deux bascules 10 et 11 sont dans le même état.

Le compteur COM est dans une position quelconque et compte les impulsions d'horloge h.

La bascule à verrouillage A dans l'état $\underline{0}$ (signal QA, figure 2) verrouille à l'état $\underline{0}$ les bascules C et D par l'intermédiaire de la porte NON-OU 104, la porte NON-OU 103 fournissant un signal de niveau $\underline{1}$ puisque les deux portes NON-OU 101 et 102 fournissent toutes deux un niveau $\underline{0}$ (bascules 10 et 11 dans le même état). Ce signal de la porte NON-OU 103 empêche la fourniture d'un signal de commande READ ou START par les portes NON-OU 111 ou 112.

L'état de la bascule E dépend du niveau de comptage atteint mais n'a de toute façon aucun effet (pas de signal READ). L'état de la bascule B reste celui qu'elle a pris à la mise sous tension et est indifféremment $\underline{1}$ ou $\underline{0}$, le signal de commande RING ne pouvant pas être fourni par la porte 219 puisque la sortie Q̄ àe la bascule A en position d'attente (état $\underline{0}$) force l'envoi d'un signal de niveau $\underline{0}$.

Tous ces états sont résumés par les signaux donnés au début de la figure 2. Un signal alternatif, en principe le signal de sonnerie attendu, étant présent sur la ligne d'abonné, une première transition (par exemple du niveau bas vers le niveau haut) a lieu à l'entrée de la bascule 10, ceci étant schématisé par une flèche pour le signal $f_E$ de la figure 2. La bascule 10 change alors d'état sur la première impulsion d'horloge h qui suit. Pendant toute la période jusqu'à l'impulsion d'horloge suivante qui verra la recopie de l'état de la bascule 10 par la bascule 11, il y a désaccord entre les sorties des bascules 10 et 11. Ceci se traduit par l'apparition d'un niveau $\underline{1}$ sur la sortie d'une des portes NON-OU 101 ou $\overline{1}$02, ici la porte 102, ce qui fait basculer la bascule à verrouillage D dans l'état $\underline{1}$. En même temps, la poste NON-OU 103 va fournir un niveau $\underline{0}$ jusqu'à l'impulsion d'horloge suivante. Ceci permet aux portes 111 et 112 de fournir en succession un signil de commande READ puis un signal de commande START.

Le signal de commande READ place la bascule à verrouillags B à l'état $\underline{1}$ (signal QB sur la figure 2), si elle ny était pas puisque la bascule A est à l'état $\underline{0}$. Ceci impose à la porte NON-OU 219 de fournir un signal RING de niveau $\underline{0}$. Le signal de commande START réinitialise le compteur COM, le décodeur DEC fournissant alors un signal initial de code CO (valeur de code Ci sur la figure 2). Par ailleurs, il place la bascule à verrouillage A à l'état $\underline{1}$, en position de mesure, par l'intermédiaire de la porte NON-ET 212 et de l'inverseur 221. Enfin, le signal initial CO place la bascule à verrouillage E en l'état $\underline{1}$ (signal QE de la figure 2) si elle n'y était pas.

Après l'impulsion d'horloge suivante qui permet la recopie par la bascule 11 de l'état de la bascule 10, la porte NON-OU 103 fournit de nouveau un signal de niveau 1 qui interdit la fourniture d'autres signaux de commande READ ou START. Le circuit de sonnerie étant ainsi en position de mesure, si une transition en sens inverse se produit dans le signal d'entrée (flèche vers le bas sur la figure 2), la bascule 10 change d'état sur l'impulsion d'horloge qui suit. Mais, comme la porte NON-OU 101 qui devrait détecter le désaccord entre les états des bascules 10 et 11 est verrouillée par le signal de sortie au niveau 1 de la bascule à verrouillage D, ce désaccord n'a aucun effet et la bascule 11 recopie l'état de la bascule 10 lors de l'impulsion d'horloge suivante.

Lorsque le compteur COM a compté cent six impulsions, un signal de temps C1 correspondant au code C1 est fourni par le décodeur DEC. Ce signal fait passer la bascule à verrouillage E de mesure dans l'état 0, ce qui permet de définir un créneau de validité pour la détection d'une transition de même sens pendant toute la période où elle reste dans cet état.

Si une telle transition dans le signal d'entrée (deuxième flèche vers le haut sur la figure 2) se produit avant l'apparition du signal de temps C2, c'est que le signal alternatif sur la ligne d'abonné a une fréquence comprise entre soixante hertz et vingt hertz et on en conclut que le signal de sonnerie est bien présent. Sur la première impulsion d'horloge qui suit la transition, la bascule 10 change d'état. Le désaccord entre les basculer 10 et 11 est détecté de la manière déjà décrite précédamment pour le première transition et un signal de commande READ puis un signal START sont délivrés par le circuit 100, la bascule à verrouillage D restant à l'état 1. Le signal de commande READ déclenche la recopie de l'état de la bascule E par la bascule B qui passe donc à l'état 0 puisque la mesure est valide (signal QB sur la figure 2). La porte NON-OU 219, recevant alors deux signaux de niveau 0, fournit un signal de commande RING au niveau 1 qui déclenche la sonnerie par le générateur SON.

Le signal de commande START réinitialise ensuite le compteur COM, ce qui produit l'apparition d'un signal initial CO remettant la bascule E à l'état 1, et redéclenche ainsi une nouvelle période de mesure comme celle qui vient d'être décrite. Tant que des transitions de même sens que la première continuent à être détectées à l'intérieur des créneaux de validité définis par la bascule E, le signal de commande RING reste au niveau 1 et la sonnerie continue.

La figure 3 illustre le fonctionnement du circuit selon l'invention lorsqu'une transition du sens attendu ne se produit plus pendant le créneau de validité mais après, l'apparition de cette transition (par exemple parasite apparaissant juste après la disparition du signal de sonnerie) ayant lieu toutefois avant que le temps de comptage le plus long correspondant au signal de temps C3 se soit écoulé depuis la précédente détection d'une transition. On voit que l'apparition du signal de temps C2 fourni par le décodeur marque la fin du créneau de validité et le retour de la bascule E à l'état 1. La transition parasite détectée par le circuit 100 provoque l'émission d'un signal de commande READ puis d'un signal de commande START, après le changement d'état de la bascule 10. Le signal READ commande la recopie de l'état de la bascule E par la bascule B qui passe alors à l'état 1. De ce fait, Le signal de commande RING à la sortie de la porte NON-OU 219 passe au niveau 0 et la sonnerie s'arrête.

Le signal START réinitialise le compteur COM et déclenche une nouvelle période de mesure. Il est clair que si la transition parasite avait lieu avant le signal C1 au lieu d'avoir lieu après le signal C2, le fonctionnement serait le même.

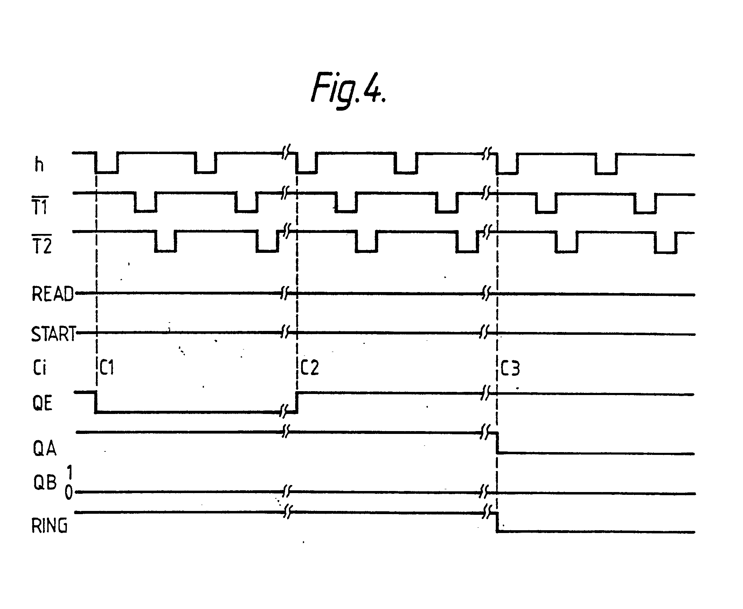

La figure 4 illustre le cas où le signal de sonnerie vient de cesser sur la ligne d'abonné et où il n'y a pas de signaux parasites.

Dans ce cas, le compteur COM atteint son compte maximum sans qu'il se soit rien passé, sauf pour la bascule à verrouillage E qui est passée à l'état 0 entre les signaux de temps C1 et C2. A la fin du comptage, le signal de temps C3 apparaît. Ce signal C3 fait passer la bascule à verrouillage A à l'état 0, ce qui fait passer le signal RING au niveau 0 et déclenche une nouvelle période d'attente pour le circuit de sonnerie selon l'invention, les bascules à verrouillage C et D étant remises à zéro par la porte NON-OU 104. Naturellement, si le signal de sonnerie ne réapparaît pas, au bout d'un temps donné la tension d'alimentation disparaît elle aussi.

Un des avantages du circuit de sonnerie selon l'invention, c'est qu'il effectue la reconnaissance de la fréquence du signal de sonnerie sur une période complète du signal, donc avec une certitude beaucoup plus grande. Par ailleurs, il est clair qu'on peut choisir tout créneau de validité souhaité en modifiant le décodeur.

Dans le circuit 200 de mesure de temps, on a prévu une porte NON-ET 210 suivie d'un inverseur 211 pour permettre d'inhiber l'action du signal de temps C2 sur la bascule E par un signal INHC2 au niveau 0. Ceci permet de prolonger le créneau de validité jusqu'au signal C3 et permet par exemple la détection d'un signal de sonnerie de fréquence 16,5 Hz.

## Revendications

1. Circuit de sonnerie pour poste téléphonique, réalisable en circuit intégré, destiné à fournir à un haur-parleur (HP) un signal à fréquence audible à une fréquence choisie, lorsque le signal de sonnerie est présent sur la ligne téléphonique aboutissant audit poste, ledit circuit de sonnerie étant alimenté par ledit signal de sonnerie convenablement redressé, caractérisé en ce que ledit circuit de sonnerie comprend:

- un circuit d'horloge (H) fournissant divers signaux d'horloge (h, T̄1, T̄2, h') à partir des signaux d'un oscillateur stable (GEN);

- un compteur (COM) associé à un décodeur (DEC), ledit compteur comptant les impulsions d'un signal d'horloge (h) reçu du circuit d'horloge (H) et pouvant être réinitialisé par un premier signal de commande (START) et ledit décodeur fournissant à partir du contenu du compteur un signal initial (CO), correspondant à l'apparition du code initial dans le compteur, et différents signaux de temps (C1, C2, C3) correspondant respectivement à l'écoulement de différentes périodes de temps à partir du signal initial;

- un générateur de sonnerie (SON) fournissant, à partir d'un signal d'horloge (h') délivré par le circuit d'horloge (H), ledit signal à fréquence audible lorsqu'il reçoit un second signal de commande (RING); et

- un ensemble de détection de signal de sonnerie (100, 200) comprenant un circuit (100) de détection de transitions de même sens dans le signal de sonnerie reçu, circuit qui fournit le premier signal de commande (START) et un troisième signal de commande (READ) lors de l'apparation de chaque transition ayant ledit sens, et un circuit (200) de mesure de temps écoulé entre deux transition successives, détectées par le circuit (100) de détection de transitions, pour déterminer si le signal de sonnerie est présent et fournir alors ledit second signal de commande (RING) pedant tout le temps de sa présence.

2. Circuit de sonnerie selon la revendication 1, caractérisé en ce qu'il comporte en outre un circuit de détection de tension suffisante (DTS) pour détecter si la tension redressée obtenue à partir du signal de sonnerie est suffisante pour assurer le fonctionnement normal du circuit de sonnerie et pour fournir un signal d'autorisation de fonctionnement à l'ensemble de détection de signal de sonnerie (100, 200), signal d'autorisation dont l'absence maintient ledit ensemble en position d'attente.

3. Circuit de sonnerie selon la revendication 2, caractérisé en ce que ledit circuit de détection de tension suffisante (DTS) comprend en parallèle aux bornes de la tension d'alimentation redressée une première branche contenant un transistor MOS (T1) d'un premier type (p ou n), dont la source est reliée à une première borne de l'alimentation et dont le drain et la grille, reliés entre eux, sont connectés à l'autre borne de l'alimentation par une première résistance (R1), et une seconde branche contenant un transistor MOS (T2) d'un deuxième type (n ou p), dont la source est reliée à ladite autre borne et dont le drain est relié par une seconde résistance (R2) à la première borne de l'alimentation, la grille de ce transistor (T2) de la seconde branche étant reliée au point commun entre la première résistance et le transistor de la première branche et le signal d'autorisation étant prélevé au point commun entre la seconde résistance et le transistor de la seconde branche.

4. Circuit de sonnerie selon l'une quelconque des revendications 1 à 3, caractérisé en ce que ledit circuit (100) de détection de transitions de même sens comprend:

- une première bascule (10) de type D dont l'entrée (D) reçoit ledit signal de sonnerie de la ligne téléphonique et une deuxième bascule (11) de type D recopiant l'état de la première bascule (10) lors de l'impulsion de signal d'horloge (h) suivante;

- deux bascules à verrouillage (C, D) de mémorisation du sens dans lequel a eu lieu la première transition détectée;

- un premier circuit logique (101, 102, 103) pour commander l'état desdites bascules à verrouillage (C, D) à partir de la comparaison de l'état desdites bascules (10, 11) de type D et pour fournir un signal de transition détectée lorsqu'a lieu une transition de sens voulu, l'état desdites bascules à verrouillage étant retransmis audit premier circuit logique pour interdire toute commande ultérieure de basculement par une transition de l'autre sens, après qu'une première transition a fait basculer une des bascules à verrouillage (C, D); et

- deux portes à coïncidence (111, 112), recevant ledit signal de transition détectée et des signaux d'horloge (T̄1, T̄2) convenablement décalés, pour fournir succesivement le troisième signal de commande (READ) puis le premier signal de commande (START) lorsqu'une transition de sens voulu est détectée.

5. Circuit de sonnerie selon la revendication 4, caractérisé en ce que ledit premier circuit logique (101, 102, 103) comprend:

- une première porte NON-OU (101) dont les entrées sont reliées à la sortie inversée de la première bascule (10) de type D, à la sortie non inversée de la seconde bascule (11) et à la sortie de la seconde bascule à verrouillage (D) et dont la sortie commande la première bascule à verrouillage (C);

- une seconde porte NON-OU (102) dont les entrées sont reliées à la sortie non inversée de la première bascule (10) de type D, à la sortie inversée de la seconde bascule (11) et à la sortie de la première bascule à verrouillage (C) et dont la sortie commande la seconde bascule à verrouillage (D); et

- une troisième porte NON-OU (103) dont les entrées sont reliées aux sorties des deux premières portes NON-OU (101, 102) et dont la sortie fournit ledit signal de transition détectée.

6. Circuit de sonnerie selon l'une des revendications 4 ou 5, caractérisé en ce que le circuit (100) de détection de transitions de même sens comprend en outre un second circuit logique (107, 108, 109 110) servant à relier à l'entrée (D) de la seconde bascule (11) soit la sortie non inversée de la première bascule (10), soit son entrée (D), selon que ledit signal d'autorisation est présent ou non.

7. Circuit de sonnerie selon l'une quelconque des revendications 1 à 6, caractérisé en ce que ledit circuit (200) de mesure du temps comprend:

- une première bascule à verrouillage (A) de fonction qui, selon son état, met l'ensemble de détection (100, 200) en position d'attente ou en position de mesure, l'état d'attente étant imposé par l'absence du signal d'autorisation du circuit de détection de tension suffisante (DTS) ou par le signal de temps (C3) du décodeur (DEC) correspondant au comptage du temps le plus long que le compteur (COM) puisse compter, sans qu'il y ait eu pendant ce temps apparition d'une transition du signal de sonnerie, et l'état de mesure étant imposé par l'apparition du premier signal de commande (START);

- une deuxième bascule à verrouillage (E) de mesure qui détermine, lorsqu'elle est dans un état déterminé, un créneau de validité pour l'apparition d'une transition de même sens, le passage dans ledit état déterminé étant commandé par un premier signal de temps (C1) correspondant à une valeur minimum de la période du signal de sonnerie à détecter et le retour à l'autre état étant commandé par l'apparition d'un second signal de temps (C2) correspondant à une valeur maximum de la période du signal de sonnerie, ou du signal initial (CO);

- une troisième bascule à verrouillage (B) de lecture;

- un circuit logique (213 à 218) autorisant la recopie de l'état de la deuxième bascule à verrouillage (E) par la troisième bascule à verrouillage (B) sous la commande du troisième signal de commande (READ) correspondant à la détection d'une transition de sens voulu, lorsque la première bascule à verrouillage (A) est dans l'état de mesure, et positionnant ladite troisième bascule à verrouillage (B) dans l'état ne correspondant pas à une mesure valide, sous la commande du troisième signal de commande (READ), lorsque la première bascule à verrouillage (A) est dans l'état d'attente; et

- une porte à coïncidence (219) fournissant le second signal de commande (RING) lorsque la première bascule à verrouillage (A) est dans l'état de mesure et que la troisième bascule à verrouillage est dans l'état correspondant à une mesure valide.

8. Circuit de sonnerie selon la revendication 7, caractérisé en ce que le créneau de validité peut être prolongé en envoyant audit circuit (200) de mesure du temps un signal d'inhibition (INHC2) qui empêche l'action du second signal de temps (C2) sur la deuxième bascule à verrouillage (E).

## Patentansprüche

1. Monolithisch integrierte Weckschaltung für Fernsprecher zum Speisen eines Lautsprechers (HP) mit einem Audiosignal wählbarer Frequenz, wenn das Wecksignal auf der den Fernsprecher versorgenden Leitung auftritt, das nach geeigneter Gleichrichtung als Betriebsspannung der Wechselschaltung dient, <u>gekennzeichnet durch</u>

- eine verschiedene von einem stabilen Oszillator (GEN) abgeleitete Taktsignale (h, T1, T2, h') liefernde Taktschaltung (H),

- einen einem Decoder (DEC) zugeordneten Zähler (COM), der die Impulse eines der Taktsignale (h) der Taktschaltung zählt und durch ein erstes Steuersignal (START) zurückgesetzt wird, während der Decoder aus dem Zählers ein Anfangssignal (CO) und nach Ablauf verschiedener Zeiten nach dem Anfangssignal mehrere Zeitsignale (C1, C2, C3) bildet,

- einen das Audiosignal aus dem Taktsignal (h') dann bildenden Weckgenerator (SON), wenn ihm ein zweites Steuersignal (RING) zugeführt wird, und

- einen Wecksignal-Detektor (100, 200), der eine gleichsinnige Nulldurchgänge des Wecksignals feststellende Schaltung (100), die das erste Steuersignal (START) erzeugt und ein drittes Steuersignal (READ) bei jedem gleichsinnigen Nulldurchgang und eine die Zeit zwischen zweien dieser Nulldurchgänge bestimmende Meßschaltung (200) enthält, um festzustellen, ob das Wecksignal vorhanden ist, und um das zweite Steuersignal (RING) während dieses Vorhandensein zu liefern.

2. Weckschaltung nach anspruch 1, gekennzeichnet durch eine Spannungsüberwachungsschaltung (DTS) für das gleichgerichtete Wecksignal zur Sicherstellung der Funktion der Weckschaltung und zur Abgabe eines Enable-Signals an den Wecksignal-Detektor (100, 200), bei dessen Abwesenheit er in Bereitschaftsstellung verbleibt.

3. Weckschaltung nach Anspruch 2, dadurch gekennzeichnet, daß die Spannnungsüberwachungsschaltung (DTS) einen über der Betriebsspannung liegenden ersten Zweig mit einem ersten MOS-Transistor (T1) eines ersten Leitungstyps (p oder n), dessen Source mit dem einen Pol der Betriebsspannung und dessen Gate und Drain über einen ersten Widerstand (R1) mit dem anderen Pol der Betriebsspannung verbunden sind, und einen über der Betriebsspannung liegenden zweiten Zweig mit einem zweiten MOS-Transistor (T2) des anderen Leitungstyps (n oder p) enthält, dessen Source mit dem anderen Pol, dessen Drain über einen zweiten Widerstand (R2) mit dem ersten Pol der Betriebsspannung und dessen Gate mit dem Verbindungspunkt von Gate des ersten Transistors mit dem ersten Widerstand verbunden ist und daß das Enable-Signal am Verbindungspunkt von zweitem Transistor und zweitem Widerstand abgegriffen ist.

4. Weckschaltung nach einem der Ansprüche 1 bis 3, gekennzeichnet durch eine Schaltung (100) ( = Nulldurchgangsdetektor) mit folgenden Merkmalen:

- dem D-Eingang eines ersten D-Flipflops (10) ist das Wecksignal zugeführt,

- ein zweites D-Flipflop (11) gelangt in den Zustand des ersten D-Flipflops beim nächsten Impuls des Taktsignals (h)

- die Richtung des ersten Nulldurchgangs wird in zwei Latches (C, D) gespeichert,

- eine erste Logikschaltung (101, 102, 103) steuert den Zustand der beiden Latches (C, D) aufgrund des Vergleiches des Zustandes der beiden D-Flipflops und liefert ein Nulldurchgangssignal, wenn ein Nulldurchgang gewünschter Richtung auftritt, während der Zustand der beiden Latches in die erste Logik zur Verhinderung eines weiteren Steuersignals aufgrund eines Nulldurchgangs in der anderen Richtung zurückübertragen wird, nachdem ein erster Nulldurchgang eine Zustandsänderung eines der Latches (C, D) bewirkt hat, und

- zwei Koinzidenz-Gatter (111, 112), denen das Nulldurchgangssignal und die geeignet verschobenen Taktsignale (T1, T2) zugeführt sind, um nacheinander das dritte Steuersignal (READ) und das erste Steuersignal (START) zu erzeugen, wenn ein Nulldurchgang der gewünschten Richtung festgestellt wurde.

5. Weckschaltung nach anspruch 4, gekennzeichnet durch eine erste Logikschaltung (101, 102, 103) mit folgenden Merkmalen:

- ein erstes NOR-Gatter (101), von dessen Eingängen einer an den invertierenden Ausgang des ersten D-Flipflops (10), einer an den nichtinvertierenden Ausgang des zweiten D-Flipflop (11) und einer an den Ausgang des zweiten Latchs (D) angeschlossen ist sowie dessen Ausgang das erste Latch (C) steuert,

- ein zweites NOR-Gatter (102), von dessen Eingängen einer mit dem nichtinvertierenden Ausgang des ersten D-Flipflops (10), einer mit dem invertierenden Ausgang des zweiten D-Flipflops (11) und einer mit dem Ausgang des ersten Latchs (C) verbunden ist sowie dessen Ausgang das zweite Latch (D) steuert, und

- ein drittes NOR-Gatter (103), von dessen Eingängen einer am Ausgang des ersten und einer am Ausgang des zweiten NOR-Gatters (101, 102) liegt und dessen Ausgang das Nulldurchgangssignal liefert.

6. Weckschaltung nach Anspruch 4 oder 5, dadurch gekennzeichnet, daß der Nulldruchgangsdetektor (100) eine zweite Logikschaltung (107 ... 110) enthält, die den D-Eingang des zweiten D-Flipflops (11) entweder mit dem nichtinvertierenden Ausgang oder mit dem Eingang (D) des ersten D-Flipflops (10) in Abhängigkeit vom Vorhandensein des Enable-Signals verbindet.

7. Weckschaltung nach einem der Ansprüche 1 bis 6, dadurch gekennzeichnet, daß die Meßschaltung (200) enthält:

- ein erstes (Funktions-)Latch (A), das zustandsabhängig den Wecksignal-Detektor (100, 200) in die Bereitschaftsstellung oder die Meßstellung bringt, wobei

- die Bereitschaftstellung durch die Abwesenheit des Enable-Signals der Spannungsüberwachungsschaltung (DTS) oder durch dasjenige Zeitsignal (C3) des Decoders (DEC) definiert ist, das der längstmöglichen Zählzeit des Zählers (COM) entspricht, ohne daß es während dieser Zeit einen Nulldurchgang des Wecksignals gegeben hat, und

- die Meßstellung durch das Auftreten des ersten Steuersignals (START) definiert ist,

- ein zweites (Meß-)Latch (E), das, wenn es in einem vorbestimmten Zustand ist, ein Gültigkeitsfenster für einen Nulldurchgang gleicher Richtung festlegt, wobei der Übergang in den vorbestimmten Zustand durch ein erstes Zeitsignal (C1) gesteuert ist, das der kürzesten Periodendauer des festzustellenden Wecksignals entspricht, und wobei die Rückkehr in den anderen Zustand durch das Auftreten eines zweiten Zeitsignals (C2) gesteuert ist, das der längsten Periodendauer des Wecksignals oder des Anfangssignals (CO) entspricht,

- ein drittes (Lese-)Latch (B),

- eine logische Schaltung (213 bis 218), die die Wiederholung des Zustandes des zweiten Latchs (E) durch das dritte Latch (B) unter Steuerung durch das dritte Steuersignal (READ) bedingt, das der Feststellung eines Nulldurchgangs mit gewünschtem Sinn entspricht, wenn das erste Latch (A) im Meß-Zustand ist, und die das dritte Latch (B) in den keiner gültigen Messung entsprechenden Zustand unter Steuerung des dritten Steuersignals (READ) versetzt, wenn das erste Latch in Bereitschaftsstellung ist, und

- ein Koinzidenz-Gatter (219), das das zweite Steuersignal (RING) liefert, wenn das erste Latch (A) im Meßzustand und das dritte Latch im einer gültigen Messung entsprechenden Zustand ist.

8. Weckschaltung nach Anspruch 7, dadurch gekennzeichnet, daß das Gültigkeitsfenster durch Zuführung eines Inhibit-Signals (INHC2) an die Meßschaltung (200) verlängerbar ist, das das Einwirken des zweiten Zeitsignals (C2) auf das zweite Latch (E) verhindert.

## Claims

1. A ringing circuit for a telephone set, designed as an integrated circuit, intended to furnish a signal at a chosen audio frequency to a loudspeaker (HP) when the ringing signal is present on the telephone line supplying the said telephone set, the said ringing circuit being powered by the said ringing signal suitably rectified, characterized in that the said ringing circuit comprises:

- a clock circuit (H) furnishing various clock signals (h, T̄1, T̄2, h') from the signals of a stable oscillator (GEN);

- a counter (COM) associated with a decoder (DEC), the said counter counting the pulses of a clock signal (h) received from the clock circuit (H) and being capable of being reset by a first control signal (START) and the said decoder furnishing from the contents of the counter an initial signal (CO), corresponding to the appearance of the initial code in the counter, and various time signals (C1, C2, C3) corresponding respectively to the passage of various periods of time after the initial signal;

- a ringing generator (SON) furnishing, from a clock signal (h') delivered by the clock circuit (H), the said audio frequency signal when it receives a second control signal (RING); and

- a ringing signal detection system (100, 200) containing a circuit (100) for detecting transitions in the same direction in the received ringing signal, which circuit furnishes the first control signal (START) and a third control signal (READ) at the moment when each transition in the said direction appears, and a circuit (200) for measuring the time which has elapsed between two successive transitions, detected by the transition detection circuit (100), in order to determine whether the ringing signal is present and, if so, to furnish the said second control signal (RING) as long as the ringing signal remains present.

2. A ringing circuit according to Claim 1, characterized in that it also includes a sufficient-voltage detection circuit (DTS) in order to determine whether the rectified voltage obtained from the ringing signal is sufficient to ensure normal operation of the ringing circuit and to furnish an operate-ensble signal to the ringing signal detection system (100, 200), which, without this enable signal, remains in the standby position.

3. A ringing circuit according to Claim 2, characterized in that the said sufficient-voltage detection circuit (DTS) includes, in parallel with the terminals of the rectified voltage supply, a first arm containing an MOS transietor (T1) of a first type (p or n), whose source is connected to a first terminal of the supply and whose gate and drain, connected together, are connected to the other terminal of the supply via a firet resistor (H1), and a second arm containing an MOS transistor (T2) of a second type (n or p), whose source is connected to the said other terminal and whose drain is connected via a second resistor (R2) to the first terminal of the supply, the gate of this transistor (T2) of the second arm being connected to the common point between the first resistor and the transistor of the first arm and the enable signal being extracted at the common point between the second resistor and the transistor of the second arm.

4. A ringing circuit according to any one of Claims 1 to 3, characterized in that the said circuit (100) for detecting transitions in the same direction comprises:

- a first D-type flip-flop (10) whose input (D) receives the said ringing signal from the telephone line and a second D-type flip-flop (11) repeating the state of the first flip-flop (10) upon the next pulse of the clock signal (h);

- two latch circuits (C, D) storing the direction in which the first detected transition took place;

- a first logic circuit (101, 102, 103) to control the state of the said latches (C, D) from the comparison or the state of the said D-type flipflops (10, 11) and to furnish a detected-transition signal when a transition in the desired direction has occurred, the state of the said latches being retransmitted to the said first logic circuit in order to inhibit any further change-of-state order by a transition in the other direction after a first transition has caused one of the latches (C, D) to change state; and

- two coincidence gates (111, 112), receiving the said detected-transition signal and clock signals ($\bar{T}$1, $\bar{T}$2), properly shifted, to furnish successively the third control signal (READ) and then the first control signal (START) when a transition in the desired direction is detected.

5. A ringing circuit according to Claim 4, characterized in that the said first logic circuit (101, 102, 103) comprises:

- a first NOR gate (101) whose inputs are connected to the inverted output of the first D-type flip-flop (10), to the non-inverted output of the second flip-flop (11) and to the output of the second latch (D), and whose output controls the first latch (C);

- a second NOR gate (102) whose inputs are connected to the non-inverted output of the first D-type flip-flop (10), to the inverted output of the second flip-flop (11) and to the output of the first latch (C), and whose output controls the second latch (D); and

- a third NOR gate (103) whose inputs are connected to the outputs of the first two NOR gates (101, 102) and whose output furnishes the said detected-transition signal.

6. A ringing circuit according to any one of Claims 4 or 5, characterized in that the circuit (100) for the detection of transitions in the same direction also includes a second logic circuit (107, 108, 109, 110) used to connect to the input (D) of the second flip-flop (11) either the non-inverted output of the first flip-flop (10), or its input (D), depending upon whether the said enable signal is present or not.

7. A ringing circuit according to any one of Claims 1 to 6, characterized in that the said time-measuring circuit (200) comprises:

- a first function latch (A) which, according to its state, places the detection system (100, 200) in the standby position or in the measuring position, the standby state being specified by the absence of the enable signal from the sufficient-voltage detection circuit (DTS) or by the time signal (C3) from the decoder (DEC) corresponding to the longest possible counting time of the counter (COM), without the appearance of a ringing signal transition during that time, and the measuring state being specified by the appearance of the first control signal (START);

- a second measurement latch (E) which defines, when it is in a predetermined state, a validity window for the appearance of a transition in the same direction, the change to the said predetermined state being controlled by a first time signal (C1) corresponding to a minimum value of the period of the ringing signal to be detected and the return to the other state being controlled by the appearance of a second time signal (C2), corresponding to a maximun value of the period of the ringing signal, or of the initial signal (CO);

- a third read latch (B);

- a third logic circuit (213 to 218) authorizing the repetition of the state of the second latch (E) by the third latch (B) on the command of the third control signal (READ) corresponding to the detection of a transition in the desired direction, when the first latch (A) is in the measuring state, and positioning the said third latch (B) in the state not corresponding to a valid measurement, on the command of the third control signal (READ), when the first latch (A) is in the standby state; and

- a coincidence gate (219) furnishing the second control signal (RING) when the first latch (A) is in the measuring state and the third latch is in the state corresponding to a valid measurement.

8. A ringing circuit according to Claim 7, characterized in that the validity window can be extended by sending to the said time-measuring circuit (200) an inhibit signal (INHC2) which inhibits the action of the second time signal (C2) on the second latch (E).

Fig.1.

## Fig.2.

## Fig.3.

# Fig.4.